# EUROPEAN PATENT SPECIFICATION

(11) **EP 4 503 320 B1**
(45) Date of publication and mention of the grant of the patent: **02.09.2026**
(21) Application number: 23827361.9
(22) Date of filing: 27.04.2023
(51) Int. Cl.: H01M 10/04, H01M 50/533, H01M 50/531, H01M 50/534, H01M 50/536, H01M 50/54, H01M 50/553

(54) **MANUFACTURING DEVICE OF SECONDARY BATTERY AND MANUFACTURING METHOD OF SECONDARY BATTERY**
HERSTELLUNGSVORRICHTUNG EINER SEKUNDÄRBATTERIE UND HERSTELLUNGSVERFAHREN EINER SEKUNDÄRBATTERIE
DISPOSITIF DE FABRICATION DE BATTERIE SECONDAIRE ET PROCÉDÉ DE FABRICATION DE BATTERIE SECONDAIRE

(30) Priority: 20.06.2022 KR 20220074849
(43) Date of publication of application: 05.02.2025
(73) Proprietor: LG Energy Solution, Ltd., Seoul 07335 (KR)
(72) Inventor: CHOI, Hongjin, Daejeon 34122 (KR); SON, Gilsang, Daejeon 34122 (KR); KONG, Jinhak, Daejeon 34122 (KR); KIM, Jaeyun, Daejeon 34122 (KR)
(74) Representative: Plasseraud IP
(86) International application number: PCT/KR2023/005776
(87) International publication number: WO 2023/249241

(56) References cited:
- CN-U- 207 521 469
- GB-A- 2 253 364
- JP-A- H0 945 360
- JP-A- H06 224 351
- JP-A- H08 215 763
- JP-A- H08 215 763
- JP-B2- H0 682 772
- JP-B2- H0 682 772
- KR-A- 20190 135 859
- KR-A- 20200 105 272
- KR-A- 20210 092 094
- KR-B1- 101 062 267
- US-A1- 2012 121 965

## Description

### [Technical Field]

### CROSS REFERENCE TO RELATED APPLICATION(S)

This application claims benefit of priority to Korean Patent Application No. 10-2022-0074849 filed on June 20, 2022 in the Korean Intellectual Property Office.

The present invention relates to a manufacturing device of a secondary battery and a manufacturing method of a secondary battery, and more particularly, to a manufacturing device of a secondary battery and a manufacturing method of a secondary battery capable of preventing disconnection by reducing tensile stress applied to a joint region of an electrode lead and an electrode tab.

### [Background Art]

Due to the rapid increase in the use of fossil fuels, demand for the use of alternative and clean energy has increased, and as portion of this, the most actively researched fields are power generation and storage using electrochemistry.

Currently, secondary batteries are a representative example of electrochemical devices that use such electrochemical energy, and the use range thereof has gradually expanded.

Recently, technological development of and growing demand for portable devices, such as portable computers, portable phones, and cameras, have led to a rapid increase in demand for secondary batteries as an energy source, and in the midway, lithium secondary batteries exhibiting high energy density and operating potential and having a long cycle life and a low self-discharge rate have actively been researched, commercialized, and widely used.

In addition, in line with the growing interest in environmental issues, research has been conducted on electric vehicles and hybrid electric vehicles that may replace vehicles using fossil fuels, such as gasoline vehicles and diesel vehicles, which are one of the main causes of air pollution. Although nickel hydride metal secondary batteries have been mainly used as a power source for such electric vehicles and hybrid electric vehicles, research on the use of lithium secondary batteries with high energy density and discharge voltage has been actively conducted, and some are in a commercialization stage.

The lithium secondary batteries are manufactured by applying a positive electrode or negative electrode active material, a binder, and a conductive material in the form of slurry to a current collector and performing drying to form an electrode mixture layer to manufacture a positive electrode and a negative electrode, placing a separator between the positive electrode and the negative electrode, laminating them to obtain an electrode assembly, and installing the electrode assembly together with an electrolyte in a battery case. Electrode tabs extending from each cell of the electrode assembly built into the battery case are gathered together and welded to be connected to an electrode lead. The electrode tabs may be electrically connected to an external device by the electrode leads.

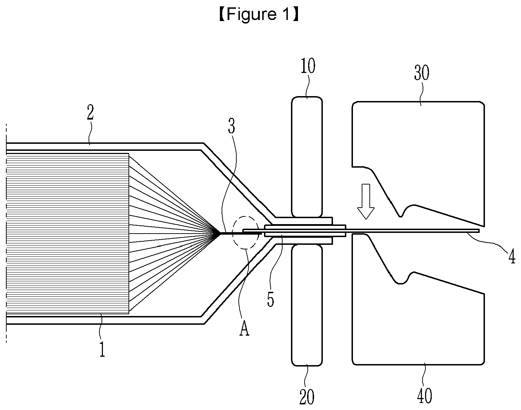

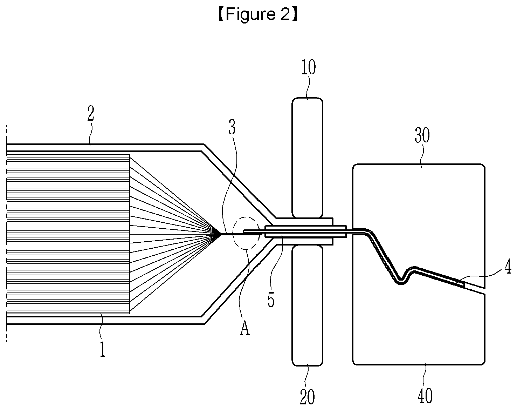

FIG. 1 and 2 are diagrams illustrating a manufacturing device of a secondary battery according to the related art.

FIG. 1 is a diagram illustrating a state before bending of an electrode lead in a manufacturing device of a secondary battery according to the related art, and FIG. 2 is a diagram illustrating a state after bending of an electrode lead in a manufacturing device of a secondary battery according to the related art.

Referring to FIGS. 1 and 2, an electrode assembly 1 is formed by stacking a plurality of positive electrodes and negative electrodes with a separator interposed therebetween, and the electrode assembly 1 is housed in a battery case 2, thereby manufacturing a secondary battery. An electrode tabs 3 connected to each electrode included in the electrode assembly 1 are gathered together, welded, and connected to an electrode lead 4 as shown in the drawing. A lead film 5 surrounding the electrode lead 4 may be located on the electrode lead 4 to increase sealing force with the battery case 2.

The electrode lead 4 may be electrically connected to an external device and may be formed to have various shapes appropriately depending on a connection environment. In order to form the electrode lead 4, a process of bending the electrode lead 4 into an appropriate shape is required. For such bending, as shown in FIGS. 1 and 2, upper and lower molds 30 and 40 having the shape of the electrode lead 4 to be obtained are prepared, and in a state in which a joint portion of the battery case 2 and the electrode lead 4 is fixed by an upper fixing mold 10 and a lower fixing mold 20, the upper and lower molds 30 and 40 are coupled to press the electrode lead 4. In this case, due to force pressing the electrode lead 4, strong tensile force may be especially applied to a joint portion A of the electrode lead 4 and the electrode tab 3, thereby causing the joint portion A of the electrode tab 3 and the electrode lead 4 to be disconnected. In addition, according to the related art, since the electrode lead 4 is formed to have only one shape using the upper and lower molds 30 and 40 having fixed shapes, it may be difficult to manufacture the electrode lead 4 in various shapes, and therefore, there is a problem in that an individual mold corresponding to the shape of the electrode lead 4 is required depending on the product type. Document JP H06 224351 A discloses a machining apparatus and processing method for bending the leads extending from the package of a lead-frame semiconductor device into a predetermined shape. The end of the lead is held between a pair of rollers.

Document GB 2 253 364 A discloses a method of roll forming semiconductor component leads through a plurality of forming roller sets. Each of the roller sets imparts an increasing bend to the semiconductor component leads until a predetermined shape is achieved.

CN 207 521 469 U discloses a method for folding a tab/ear of a Li-ion battery. The method involves a roller configured to bend an adapter piece attached to an electrode tab.

### [Disclosure]

### [Technical Problem]

The present invention provides a manufacturing device of a secondary battery and a manufacturing method of a secondary battery capable of preventing disconnection in a joint portion of an electrode tab and an electrode lead due to tensile force occurring in a process of forming the electrode lead and capable of forming electrode leads having various shapes using a single manufacturing device.

However, the problems to be solved by the exemplary embodiments of the present invention are not limited to the aforementioned problems and may be expanded in various ways.

The scope of the present invention is defined by the appended claims.

### [Technical Solution]

According to an exemplary embodiment of the present invention, a manufacturing device of a secondary battery, as a manufacturing device of a secondary battery including a plurality of electrodes and separators stacked alternately, electrode tabs provided at ends of the plurality of electrodes, and an electrode lead coupled to the electrode tabs, includes an upper fixing mold and a lower fixing mold fixing the electrode lead interposed therebetween, a plurality of lower roller molds arranged to be spaced apart from the lower fixing mold toward an outer end of the electrode lead, and a plurality of upper roller molds arranged to be spaced apart from the upper fixing mold toward the outer end of the electrode lead.

The lower roller mold and the upper roller mold each rotate and move independently.

The manufacturing device further includes: a lower support mold disposed between the lower fixing mold and the lower roller mold and supporting a lower surface of the electrode lead.

The upper roller mold includes: a first upper roller mold and a second upper roller mold sequentially arranged in a direction toward the outer end of the electrode lead, and the lower roller mold includes the first lower roller mold and the second lower roller mold sequentially arranged in the direction toward the outer end of the electrode lead.

The first lower roller mold, the first upper roller mold, the second lower roller mold, and the second upper roller mold may be sequentially arranged in the direction toward the outer end of the electrode lead.

According to another exemplary embodiment of the present invention, a manufacturing method of a secondary battery, as a manufacturing method of a secondary battery including a plurality of electrodes and separators stacked alternately, electrode tabs provided at ends of the plurality of electrodes, and an electrode lead coupled to the electrode tabs, includes fixing the electrode lead between an upper fixing mold and a lower fixing mold, forming a first bent portion by bending the electrode lead in a direction toward a lower support mold, while supporting a lower portion of the electrode lead with the lower support mold disposed to be adjacent to the lower fixing mold, and forming a second bent portion using a plurality of lower roller molds spaced apart from the lower fixing mold toward an outer end of the electrode lead and a plurality of upper roller molds spaced apart from the upper fixing mold toward the outer end of the electrode lead.

The upper roller mold includes a first upper roller mold and a second upper roller mold sequentially arranged in a direction toward the outer end of the electrode lead, and the lower roller mold includes the first lower roller mold and the second lower roller mold sequentially arranged in the direction toward the outer end of the electrode lead.

The first lower roller mold, the first upper roller mold, the second lower roller mold, and the second upper roller mold may be sequentially arranged in the direction toward the outer end of the electrode lead.

The forming of the second bent portion may include: forming a primary curved portion having a shape corresponding to a lower portion of the first upper roller mold and a secondary curved portion having a shape corresponding to an upper portion of the second lower roller mold by simultaneously lowering the first upper roller mold and the second upper roller mold.

The forming of the second bent portion may include: forming a primary curved portion having a shape corresponding to a lower portion of the first upper roller mold by lowering the first upper roller mold; and forming a secondary curved portion having a shape corresponding to an upper portion of the second lower roller mold by lowering the second upper roller mold.

The forming of the second bent portion may include: lowering the second upper roller mold to bring the second upper roller mold into contact with the electrode lead, and forming the primary curved portion having a shape corresponding to a lower portion of the first upper roller mold and a secondary curved portion having a shape corresponding to an upper portion of the second lower roller mold by lowering the first upper roller mold.

### [Advantageous Effects]

According to exemplary embodiments of the present invention, tensile force during a process of forming the electrode lead may be minimized, thereby preventing disconnection from occurring at the joint portion of the electrode tab and the electrode lead. In addition, the manufacturing device of a secondary battery and the manufacturing method of a secondary battery capable of forming electrode leads having various shapes may be provided using a single manufacturing device without manufacturing additional molds, etc.

The effects of the present invention are not limited to the effects mentioned above, and other effects not mentioned will be clearly understood by those skilled in the art from the description of the claims.

### [Description of the Drawings]

FIG. 1 is a diagram illustrating a state before bending of an electrode lead in a manufacturing device of a secondary battery according to the related art.
FIG. 2 is a diagram illustrating a state after bending of an electrode lead in a manufacturing device of a secondary battery according to the related art.
FIG. 3 is a diagram illustrating a state before bending of an electrode lead in a manufacturing device of a secondary battery according to an exemplary embodiment of the present invention.
FIG. 4 is a diagram illustrating a state after bending of an electrode lead in the manufacturing device of a secondary battery of FIG. 3.
FIG. 5 is a diagram illustrating a manufacturing method of a secondary battery according to an exemplary embodiment of the present invention.
FIGS. 6 and 7 are diagrams illustrating a manufacturing method of a secondary battery according to other exemplary embodiments of the present invention.

### [Mode for Invention]

Hereinafter, exemplary embodiments of the present invention will be described in detail with reference to the accompanying drawings to allow those skilled in the art to practice the present invention. The present invention may be implemented in various different forms and is not limited to the examples as described herein.

In the drawings, parts irrelevant to the description are omitted to clearly describe the present invention, and like reference numerals denote like elements throughout the specification.

The size and thickness of each component shown in the drawings may be arbitrarily shown for convenience of explanation, and therefore, the present invention is not necessarily limited to the shown exemplary embodiments in the drawings. In the drawings, the thickness of layers, films, panels, regions, etc., are exaggerated for clarity. Also, in the drawings, the thickness of partial layers and regions may be exaggerated for convenience of explanation.

It will be understood that when an element, such as a layer, film, region, or substrate is referred to as being "on" another element, it may be directly on the other element or intervening elements may also be present. In contrast, when an element is referred to as being "directly on" another element, there are no intervening elements present. Further, when an element is "above" or "on" the reference portion, it may mean that the element is located above or below the reference portion, and it may not necessarily mean that the element is "above" or "on" toward an opposite direction of gravity.

In addition, unless explicitly described to the contrary, the word "comprise", and variations, such as "comprises" or "comprising", will be understood to imply the inclusion of stated elements but not the exclusion of any other elements.

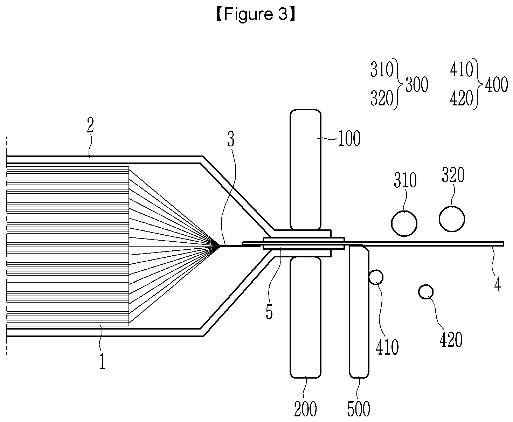

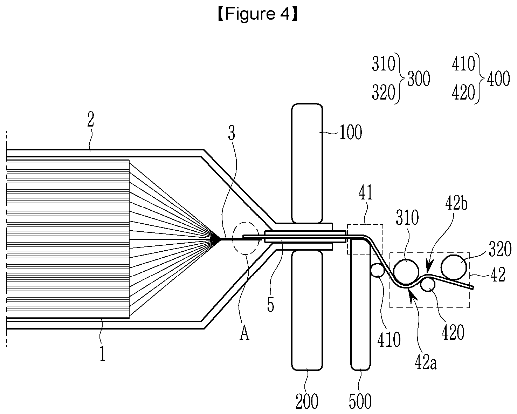

Hereinafter, a manufacturing device of a secondary battery according to an exemplary embodiment of the present invention will be described with reference to FIGS. 3 and 4.

A secondary battery includes an electrode assembly 1 housed in a battery case 2 and includes an electrode lead 4 drawn out of the battery case 2 for electrical connection to the outside. The electrode assembly 1 is a power generating device that can be charged and discharged and has a structure in which a positive electrode and a negative electrode are alternately stacked with a separator therebetween. Electrode tabs 3 are formed extending from the ends of electrodes included in the electrode assembly 1, respectively. The electrode tabs 3 may be gathered into one point and welded, and the gathered electrode tabs 3 and the electrode lead 4 may be joined by means, such as welding.

One end of the electrode lead 4 is electrically connected to the electrode tab 3 and extends via a sealing portion of the battery case 2, and the opposite end of the electrode lead 4 protrudes out of the battery case 2. A lead film 5 may be located to surround the electrode lead 4 in at least one of upper and lower portions of the electrode lead 4. The lead film 5 may improve sealing properties of a sealing portion of the battery case 2 and the electrode lead 4, while preventing a short-circuit from occurring in the electrode lead 4 during heat fusion.

Referring to FIGS. 3 and 4, the manufacturing device of a secondary battery according to an exemplary embodiment of the present invention is a device for forming, especially, a portion of the aforementioned electrode lead 4 protruding outwardly from the battery case 2, and includes an upper fixing mold 100 and a lower fixing mold 200 for fixing the electrode lead 4 and an upper roller mold 300, a lower roller mold 400, and a lower support mold 500 directly contacting the electrode lead 4 to form the shape of the electrode lead 4.

The upper fixing mold 100 and the lower fixing mold 200 are used to fix the electrode lead 4 during a molding process. In particular, the upper fixing mold 100 and the lower fixing mold 200 support a portion in which the electrode lead 4 is fixed to the battery case 2 to fix the electrode lead 4. To this end, as shown in FIG. 3, the upper fixing mold 100 and the lower fixing mold 200 are formed to press the portion in which the battery case 2 and the electrode lead 4 overlap each other, while contacting the portion above and below.

The lower support mold 500 is disposed to be adjacent to the lower fixing mold 200 and spaced apart from the lower fixing mold 200 toward an outer end of the electrode lead 4. The lower support mold 500 is in contact with a starting point of the electrode lead 4 in which molding begins, and has a shape corresponding to a first bent portion 41 of the electrode lead 4. That is, the first bent portion 41 may be formed at a position corresponding to the lower support mold 500 by pressing the upper roller mold 300 and the lower roller mold 400, which will be described below.

The upper roller mold 300 and the lower roller mold 400 are arranged to be spaced apart from the upper fixing mold 100 and the lower fixing mold 200, respectively, toward the outer end of the electrode lead 4, and the electrode lead 4 is located between the upper roller mold 300 and the lower roller molds 400. In particular, the lower roller mold 400 is spaced apart from the lower fixing mold 200 with the lower support mold 500 interposed therebetween.

A plurality of upper roller molds 300 and lower roller molds 400 may be provided, and in the present exemplary embodiment, an example in which two upper roller molds 300 and two lower roller molds 400 are provided is described, but without being limited thereto, the number and position of the upper roller mold 300 and lower roller mold 400 may be adjusted in various ways.

The upper roller mold 300 includes a first upper roller mold 310 and a second upper roller mold 320, and the lower roller mold 400 includes a first lower roller mold 410 and a second lower roller mold 420. As shown in FIGS. 3 and 4, these roller molds are arranged in the order of a first lower roller mold 410, a first upper roller mold 310, a second lower roller mold 420, and a second upper roller mold 320 in a direction from the lower support mold 500 toward the outer end of the electrode lead 4. In this state, the upper roller molds 300 may be lowered toward the electrode lead 4 and continue to be lowered, while placed between the lower roller molds 400, to press the electrode lead 4, thereby molding the electrode lead 4.

At this time, the upper roller mold 300 and the lower roller mold 400 are configured to rotate independently. When pressing the electrode lead 4, these roller molds 300 and 400 rotate, thereby minimizing frictional force with the electrode lead 4 and consequently reducing tensile force applied to the electrode lead 4. In particular, when tensile force is reduced thereby, it is possible to prevent disconnection in a joint portion A of the electrode tab 3 and the electrode lead 4, which has a relatively weak bonding strength. In the joint portion A of the electrode tab 3 and the electrode lead 4, disconnection occurred frequently due to the tensile force applied to the corresponding portion during molding of the electrode lead 4. However, as in the present exemplary embodiment, frictional contact and tensile force may be minimized to prevent such disconnection by using roller molds 300 and 400, instead of the conventional stamp type mold.

In addition, positions of the upper roller mold 300 and lower roller mold 400 may change independently. Therefore, it is possible to mold the electrode lead 4 of various shapes without replacing the mold by adjusting vertical and horizontal positions of the roller molds 300 and 400 to correspond to a required shape depending on the product. For example, in the case of molding the electrode lead of the exemplary embodiment including the first bent portion 41 and the second bent portion 42, a bending angle of the first bent portion 41 may be determined by a vertical position and pressing force of the first upper roller mold 310. In addition, the second bent portion 42 may have two curved portions, that is, a primary curved portion 42a and a secondary curved portion 42b. The shape of the primary curved portion 42a may correspond to a lower surface of the first upper roller mold 310, and the secondary curved portion 42b may correspond to an upper surface of the second lower roller mold 420. The degree of bending, that is, a depth or width, of the primary curved portion 42a and the secondary curved portion 42b may be changed by adjusting a lowering height of the upper roller mold 300 and a distance between the upper roller mold 300 and the lower roller mold 400. In addition, the size and number of roller molds 300 and 400 are not limited to the present exemplary embodiment and may be appropriately determined depending on a required shape of the electrode lead 4, etc.

According to the manufacturing device of a secondary battery according to an exemplary embodiment of the present invention, the occurrence of disconnection may be prevented by minimizing tensile force applied to the electrode lead 4 and the electrode tab 3 during bending of the electrode lead 4, and in addition, since the electrode lead 4 having various shapes may be molded even with the single manufacturing device, without replacing the mold, manufacturing costs may be reduced.

Hereinafter, as a manufacturing method using a manufacturing device of a secondary battery described above, a manufacturing method of a secondary battery according to one exemplary embodiment and another exemplary embodiment of the present invention will be described.

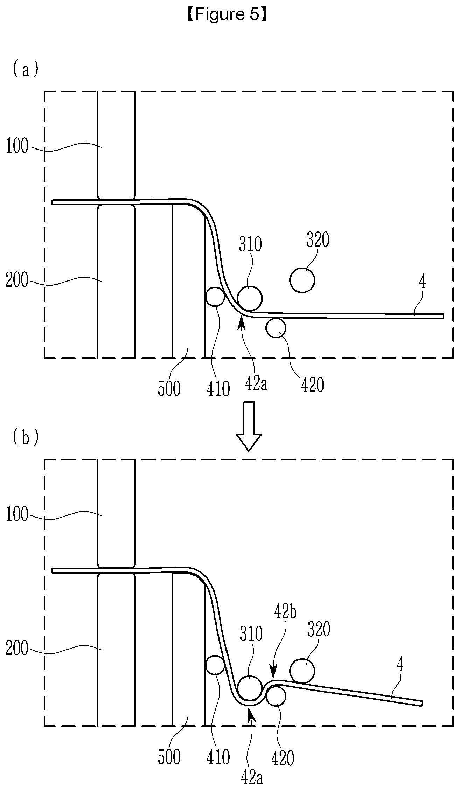

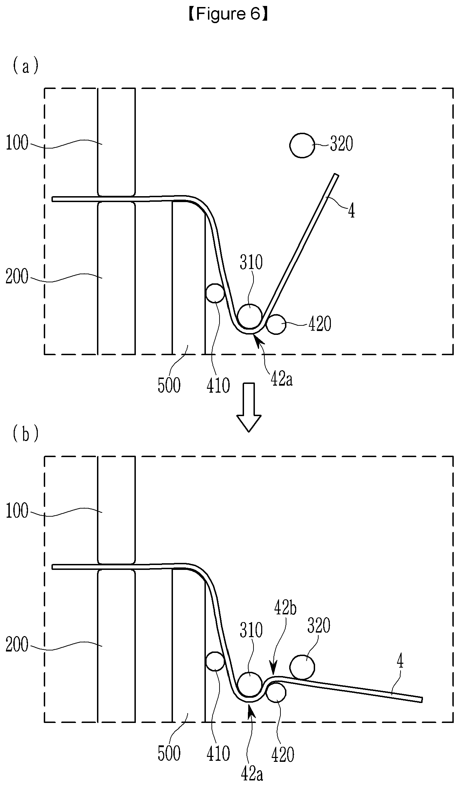

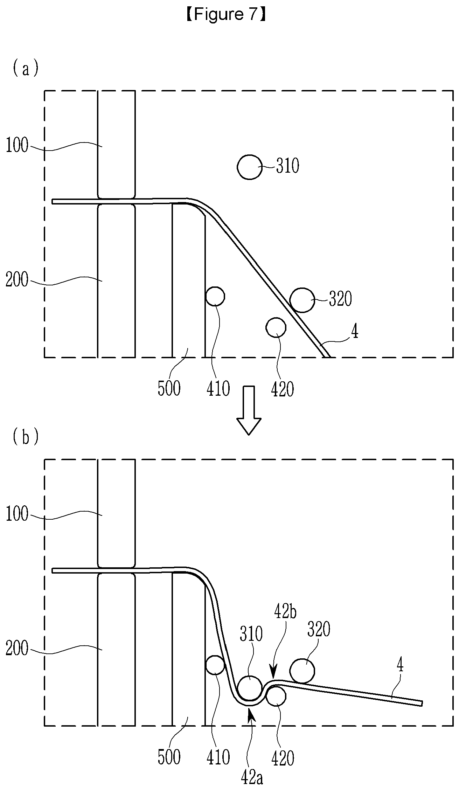

FIG. 5 is a diagram illustrating a manufacturing method of a secondary battery according to an exemplary embodiment of the present invention, and FIGS. 6 and 7 are diagrams illustrating a manufacturing method of a secondary battery according to other exemplary embodiments of the present invention.

Referring to FIG. 5, in the manufacturing method of a secondary battery according to an exemplary embodiment of the present invention, first, the electrode lead 4 is fixed between the upper fixing mold 100 and the lower fixing mold 200, and the electrode lead 4 is bent in a portion in which the lower support mold 500 supports the electrode lead 4, to form the first bent portion 41. At this time, the electrode lead 4 may be bent downwardly, that is, in a direction toward the lower support mold 500, while being supported by the lower support mold 500, and accordingly, the first bent portion 41 may have a shape corresponding to an upper surface of the lower support mold 500.

Next, the second bent portion 42 is formed using the upper roller mold 300 and the lower roller mold 400. In the present exemplary embodiment, as shown in FIG. 5, the primary curved portion 42a and the secondary curved portion 42b included in the second bent portion 42 are formed by simultaneously lowering the first and second upper roller molds 310 and 320 included in the upper roller mold 300. That is, the primary curved portion 42a corresponding to the shape of the lower surface of the first upper roller mold 310 and the secondary curved portion 42b corresponding to the shape of the upper surface of the second lower roller mold 420 may be formed by pressing the electrode lead 4 by simultaneously lowering the first and second upper roller molds 310 and 320.

Referring to FIG. 6, a manufacturing method of a secondary battery according to another exemplary embodiment of the present invention is different from the manufacturing method according to one exemplary embodiment in that the first upper roller mold 310 is first lowered and the second upper roller mold 320 is then lowered, rather than both the first and second upper roller molds 310 and 320 are lowered at the same time. That is, after the electrode lead 4 comes into contact with the first lower roller mold 410, the first upper roller mold 310, and the second lower roller mold 420 by lowering the first upper roller mold 310, the second upper roller mold 320 is lowered to press the electrode lead 4, thereby forming the primary curved portion 42a and the secondary curved portion 42b.

Referring to FIG. 7, a manufacturing method of a secondary battery according to another exemplary embodiment of the present invention is different from the manufacturing method of one exemplary embodiment in that the second upper roller mold 320 is first lowered and the first upper roller mold 310 is then lowered, rather than both the first and second upper roller molds 310 and 320 are lowered at the same time. That is, after the electrode lead 4 comes into contact with the second upper roller mole 320 by lowering the second upper roller mold 320, and subsequently, the first upper roller mold 310 may be lowered to press the electrode lead 4, thereby forming the primary curved portion 42a and the secondary curved portion 42b.

In this manner, in the manufacturing method of forming the electrode lead 4 using the manufacturing device of a secondary battery according to an exemplary embodiment of the present invention, the electrode lead 4 having a desired shape may be manufactured by lowering and moving each roller mold, especially, the upper roller molds, in various orders.

Hereinafter, tensile force occurring in the manufacturing method of a secondary battery according to the exemplary embodiments of the present invention and a manufacturing method of a secondary battery according to a comparative example will be measured and the results will be described.

In Example 1, the maximum value of tensile force applied to the joint portion A of the electrode tab 3 and the electrode lead 4 when the upper roller mold 300 was moved by about 12 mm according to the manufacturing method of FIG. 5 was measured. In Example 2, the maximum value of tensile force was measured in the same manner as that of the manufacturing method of FIG. 6, and in Example 3, the maximum value of tensile force was measured in the same manner as that of Example 1 according to the manufacturing method of FIG. 7. Meanwhile, in the comparative example, the maximum value of tensile force applied to the joint portion A of the electrode tab 3 and the electrode lead 4 by moving the upper mold 30 by about 12 mm, which is the same as that of Example 1, was measured using the molds of FIGS. 1 and 2. The results are shown in Table 1 below.

**[Table 1]**

| | Maximum tensile force (N) |
|---|---|
| Example 1 | 419.3 |
| Example 2 | 295.8 |
| Example 3 | 586.9 |
| Comparative Example | 665.4 |

As shown in Table 1, it was confirmed that in the examples of the present invention in which the electrode lead 4 was molded using the roller molds 300 and 400, the maximum tensile force value was significantly lower than that of the comparative example. Therefore, it can be seen that, according to the examples of the present invention, the occurrence of disconnection of the electrode tab 3 and the electrode lead 4 may be prevented during the process of molding the electrode lead 4.

### < Description of main elements >

3: electrode tab
4: electrode lead
100: upper fixing mold
200: lower fixing mold
300: upper roller mold
310: first upper roller mold
320: second upper roller mold
400: lower roller mold
410: first lower roller mold
420: second lower roller mold
500: lower support mold

## Claims

1. A manufacturing device for bending an electrode lead of a secondary battery, the secondary battery including a plurality of electrodes and separators stacked alternately, electrode tabs (3) provided at ends of the plurality of electrodes, and the electrode lead (4) being coupled to the electrode tabs (3), the manufacturing device comprising:
an upper fixing mold (100) and a lower fixing mold (200) fixing the electrode lead (4) interposed therebetween;
a lower roller mold (400) arranged to be spaced apart from the lower fixing mold (200) toward an outer end of the electrode lead (4) wherein the lower roller mold (400) comprises a first lower roller mold (410) and a second lower roller mold (420) sequentially arranged in the direction toward the outer end of the electrode lead (4);
a upper roller mold (300) arranged to be spaced apart from the upper fixing mold (100) toward the outer end of the electrode lead (4) wherein the upper roller mold (300) comprises a first upper roller mold (310) and a second upper roller mold (320) sequentially arranged in a direction toward the outer end of the electrode lead (4); and
a lower support mold (500) disposed between the lower fixing mold (200) and the lower roller mold (400) and supporting a lower surface of the electrode lead (4),
wherein the first upper roller mold (310), the second upper roller mold (320), the first lower roller mold (410) and the second lower roller mold (420) each rotate and move independently.

2. The manufacturing device of claim 1, wherein:
the first lower roller mold (410), the first upper roller mold (310), the second lower roller mold (420), and the second upper roller mold (320) are sequentially arranged in the direction toward the outer end of the electrode lead (4).

3. A manufacturing method of a secondary battery including a plurality of electrodes and separators stacked alternately, electrode tabs (3) provided at ends of the plurality of electrodes, and an electrode lead (4) coupled to the electrode tabs (3), the manufacturing method comprising:
fixing the electrode lead (4) between an upper fixing mold (100) and a lower fixing mold (200) of a manufacturing device according to claim 1 or 2;
forming a first bent portion (41) by bending the electrode lead (4) in a direction toward the lower support mold (500), while supporting a lower portion of the electrode lead (4) with the lower support mold (500) disposed to be adjacent to the lower fixing mold (200); and
forming a second bent portion (42) using the lower roller mold (400) spaced apart from the lower fixing mold (500) toward an outer end of the electrode lead (4) and the upper roller mold (300) spaced apart from the upper fixing mold (100) toward the outer end of the electrode lead (4).

4. The manufacturing method of claim 3, wherein:
the forming of the second bent portion (42) includes
forming a primary curved portion (42a) having a shape corresponding to a lower portion of the first upper roller mold (310) and a secondary curved portion (42b) having a shape corresponding to an upper portion of the second lower roller mold (420) by simultaneously lowering the first upper roller mold (310) and the second upper roller mold (320).

5. The manufacturing method of claim 3, wherein:
the forming of the second bent portion (42) includes:
forming a primary curved portion (42a) having a shape corresponding to a lower portion of the first upper roller mold (310) by lowering the first upper roller mold (310); and
forming a secondary curved portion (42b) having a shape corresponding to an upper portion of the second lower roller mold (420) by lowering the second upper roller mold (320).

6. The manufacturing method of claim 3, wherein:
the forming of the second bent portion (42) includes:
lowering the second upper roller mold (310) to bring the second upper roller mold (310) into contact with the electrode lead (4), and
forming the primary curved portion (42a) having a shape corresponding to a lower portion of the first upper roller mold (310) and a secondary curved portion (42b) having a shape corresponding to an upper portion of the second lower roller mold (420) by lowering the first upper roller mold (320).

## Patentansprüche

1. Herstellungsvorrichtung zum Biegen eines Elektrodenleiters einer Sekundärbatterie, wobei die Sekundärbatterie eine Vielzahl von abwechselnd gestapelten Elektroden und Separatoren und an Enden der Vielzahl von Elektroden vorgesehene Elektrodenfahnen (3) enthält, wobei der Elektrodenleiter (4) mit den Elektrodenfahnen (3) gekoppelt ist, wobei die Herstellungsvorrichtung umfasst:
eine obere Befestigungsform (100) und eine untere Befestigungsform (200), die den dazwischen angeordneten Elektrodenleiter (4) befestigen;
eine untere Rollenform (400), die so angeordnet ist, dass sie von der unteren Befestigungsform (200) zu einem äußeren Ende des Elektrodenleiters (4) hin beabstandet ist, wobei die untere Rollenform (400) eine erste untere Rollenform (410) und eine zweite untere Rollenform (420) umfasst, die sequentiell in der Richtung zum äußeren Ende des Elektrodenleiters (4) hin angeordnet sind;
eine obere Rollenform (300), die so angeordnet ist, dass sie von der oberen Befestigungsform (100) zum äußeren Ende des Elektrodenleiters (4) hin beabstandet ist, wobei die obere Rollenform (300) eine erste obere Rollenform (310) und eine zweite obere Rollenform (320) umfasst, die sequentiell in einer Richtung zum äußeren Ende des Elektrodenleiters (4) hin angeordnet sind; und
eine untere Stützform (500), die zwischen der unteren Befestigungsform (200) und der unteren Rollenform (400) angeordnet ist und eine untere Fläche des Elektrodenleiters (4) stützt,
wobei die erste obere Rollenform (310), die zweite obere Rollenform (320), die erste untere Rollenform (410) und die zweite untere Rollenform (420) sich jeweils unabhängig drehen und bewegen.

2. Herstellungsvorrichtung nach Anspruch 1, wobei:
die erste untere Rollenform (410), die erste obere Rollenform (310), die zweite untere Rollenform (420) und die zweite obere Rollenform (320) sequentiell in der Richtung zum äußeren Ende des Elektrodenleiters (4) hin angeordnet sind.

3. Herstellungsverfahren für eine Sekundärbatterie, die eine Vielzahl von abwechselnd gestapelten Elektroden und Separatoren und an Enden der Vielzahl von Elektroden vorgesehene Elektrodenfahnen (3) enthält, wobei ein Elektrodenleiter (4) mit den Elektrodenfahnen (3) gekoppelt ist, wobei das Herstellungsverfahren umfasst:
Befestigen des Elektrodenleiters (4) zwischen einer oberen Befestigungsform (100) und einer unteren Befestigungsform (200) einer Herstellungsvorrichtung nach Anspruch 1 oder 2;
Bilden eines ersten gebogenen Abschnitts (41) durch Biegen des Elektrodenleiters (4) in eine Richtung zur unteren Stützform (500) hin, während ein unterer Abschnitt des Elektrodenleiters (4) mit der unteren Stützform (500) gestützt wird, die benachbart zur unteren Befestigungsform (200) angeordnet ist; und
Bilden eines zweiten gebogenen Abschnitts (42) unter Verwendung der unteren Rollenform (400), die von der unteren Befestigungsform (500) zu einem äußeren Ende des Elektrodenleiters (4) hin beabstandet ist, und der oberen Rollenform (300), die von der oberen Befestigungsform (100) zum äußeren Ende des Elektrodenleiters (4) hin beabstandet ist.

4. Herstellungsverfahren nach Anspruch 3, wobei:
das Bilden des zweiten gebogenen Abschnitts (42)
das Bilden eines primären gekrümmten Abschnitts (42a) mit einer Form, die einem unteren Abschnitt der ersten oberen Rollenform (310) entspricht, und eines sekundären gekrümmten Abschnitts (42b) mit einer Form, die einem oberen Abschnitt der zweiten unteren Rollenform (420) entspricht, durch gleichzeitiges Absenken der ersten oberen Rollenform (310) und der zweiten oberen Rollenform (320) enthält.

5. Herstellungsverfahren nach Anspruch 3, wobei:
das Bilden des zweiten gebogenen Abschnitts (42) enthält:
Bilden eines primären gekrümmten Abschnitts (42a) mit einer Form, die einem unteren Abschnitt der ersten oberen Rollenform (310) entspricht, durch Absenken der ersten oberen Rollenform (310); und
Bilden eines sekundären gekrümmten Abschnitts (42b) mit einer Form, die einem oberen Abschnitt der zweiten unteren Rollenform (420) entspricht, durch Absenken der zweiten oberen Rollenform (320).

6. Herstellungsverfahren nach Anspruch 3, wobei:
das Bilden des zweiten gebogenen Abschnitts (42) umfasst:
Absenken der zweiten oberen Rollenform (310), um die zweite obere Rollenform (310) in Kontakt mit dem Elektrodenleiter (4) zu bringen, und
Bilden des primären gekrümmten Abschnitts (42a) mit einer Form, die einem unteren Abschnitt der ersten oberen Rollenform (310) entspricht, und eines sekundären gekrümmten Abschnitts (42b) mit einer Form, die einem oberen Abschnitt der zweiten unteren Rollenform (420) entspricht, durch Absenken der ersten oberen Rollenform (320).

## Revendications

1. Dispositif de fabrication pour plier un conducteur d'électrode d'une batterie secondaire, la batterie secondaire incluant une pluralité d'électrodes et de séparateurs empilés en alternance, des languettes d'électrode (3) prévues aux extrémités de la pluralité d'électrodes, et le conducteur d'électrode (4) étant couplé aux languettes d'électrode (3), le dispositif de fabrication comprenant :
un moule de fixation supérieur (100) et un moule de fixation inférieur (200) fixant le conducteur d'électrode (4) interposé entre eux ;
un moule à rouleau inférieur (400) agencé pour être espacé du moule de fixation inférieur (200) vers une extrémité extérieure du conducteur d'électrode (4), dans lequel le moule à rouleau inférieur (400) comprend un premier moule à rouleau inférieur (410) et un second moule à rouleau inférieur (420) agencés séquentiellement dans la direction vers l'extrémité extérieure du conducteur d'électrode (4) ;
un moule à rouleau supérieur (300) agencé pour être espacé du moule de fixation supérieur (100) vers l'extrémité extérieure du conducteur d'électrode (4), dans lequel le moule à rouleau supérieur (300) comprend un premier moule à rouleau supérieur (310) et un second moule à rouleau supérieur (320) agencés séquentiellement dans une direction vers l'extrémité extérieure du conducteur d'électrode (4) ; et
un moule de support inférieur (500) disposé entre le moule de fixation inférieur (200) et le moule à rouleau inférieur (400) et supportant une surface inférieure du conducteur d'électrode (4),
dans lequel le premier moule à rouleau supérieur (310), le second moule à rouleau supérieur (320), le premier moule à rouleau inférieur (410) et le second moule à rouleau inférieur (420) tournent et se déplacent chacun indépendamment.

2. Dispositif de fabrication selon la revendication 1, dans lequel:
le premier moule à rouleau inférieur (410), le premier moule à rouleau supérieur (310), le second moule à rouleau inférieur (420) et le second moule à rouleau supérieur (320) sont agencés séquentiellement dans la direction vers l'extrémité extérieure du conducteur d'électrode (4).

3. Procédé de fabrication d'une batterie secondaire incluant une pluralité d'électrodes et de séparateurs empilés en alternance, des languettes d'électrode (3) prévues aux extrémités de la pluralité d'électrodes, et un conducteur d'électrode (4) couplé aux languettes d'électrode (3), le procédé de fabrication comprenant :
la fixation du conducteur d'électrode (4) entre un moule de fixation supérieur (100) et un moule de fixation inférieur (200) d'un dispositif de fabrication selon la revendication 1 ou 2 ;
la formation d'une première partie pliée (41) en pliant le conducteur d'électrode (4) dans une direction vers le moule de support inférieur (500), tout en supportant une partie inférieure du conducteur d'électrode (4) avec le moule de support inférieur (500) disposé pour être adjacent au moule de fixation inférieur (200) ; et
la formation d'une seconde partie pliée (42) en utilisant le moule à rouleau inférieur (400) espacé du moule de fixation inférieur (500) vers une extrémité extérieure du conducteur d'électrode (4) et le moule à rouleau supérieur (300) espacé du moule de fixation supérieur (100) vers l'extrémité extérieure du conducteur d'électrode (4).

4. Procédé de fabrication selon la revendication 3, dans lequel:
la formation de la seconde partie pliée (42) inclut
la formation d'une partie incurvée primaire (42a) ayant une forme correspondant à une partie inférieure du premier moule à rouleau supérieur (310) et d'une partie incurvée secondaire (42b) ayant une forme correspondant à une partie supérieure du second moule à rouleau inférieur (420) en abaissant simultanément le premier moule à rouleau supérieur (310) et le second moule à rouleau supérieur (320).

5. Procédé de fabrication selon la revendication 3, dans lequel:
la formation de la seconde partie pliée (42) inclut :
la formation d'une partie incurvée primaire (42a) ayant une forme correspondant à une partie inférieure du premier moule à rouleau supérieur (310) en abaissant le premier moule à rouleau supérieur (310) ; et
la formation d'une partie incurvée secondaire (42b) ayant une forme correspondant à une partie supérieure du second moule à rouleau inférieur (420) en abaissant le second moule à rouleau supérieur (320).

6. Procédé de fabrication selon la revendication 3, dans lequel:
la formation de la seconde partie pliée (42) inclut :
l'abaissement du second moule à rouleau supérieur (310) pour amener le second moule à rouleau supérieur (310) en contact avec le conducteur d'électrode (4), et
la formation de la partie incurvée primaire (42a) ayant une forme correspondant à une partie inférieure du premier moule à rouleau supérieur (310) et d'une partie incurvée secondaire (42b) ayant une forme correspondant à une partie supérieure du second moule à rouleau inférieur (420) en abaissant le premier moule à rouleau supérieur (320).
